# EUROPÄISCHE PATENTSCHRIFT

(11) **EP 3 326 019 B1**
(45) Veröffentlichungstag und Bekanntmachung des Hinweises auf die Patenterteilung: **23.09.2026**
(21) Anmeldenummer: 16739180.4
(22) Anmeldetag: 18.07.2016
(51) Int. Cl.: G02B 21/16, G02B 21/36, G02B 21/00

(54) **LICHTBLATTMIKROSKOP ZUM GLEICHZEITIGEN ABBILDEN MEHRERER OBJEKTEBENEN**
LIGHT SHEET MICROSCOPE FOR SIMULTANEOUSLY IMAGING A PLURALITY OF OBJECT PLANES
MICROSCOPE À FEUILLE DE LUMIÈRE POUR LA REPRÉSENTATION SIMULTANÉE DE PLUSIEURS PLANS D'OBJET

(30) Priorität: 17.07.2015 DE 102015111698; 25.05.2016 DE 102016109717
(43) Veröffentlichungstag der Anmeldung: 30.05.2018
(73) Patentinhaber: Leica Microsystems CMS GmbH, 35578 Wetzlar (DE)
(72) Erfinder: KNEBEL, Werner, 76709 Kronau (DE); FAHRBACH, Florian, 69115 Heidelberg (DE)
(74) Vertreter: Schaumburg und Partner Patentanwälte mbB
(86) Internationale Anmeldenummer: PCT/EP2016/067033
(87) Internationale Veröffentlichungsnummer: WO 2017/013054

(56) Entgegenhaltungen:
- EP-A1- 3 283 916
- WO-A1-2016/020684
- WO-A1-2016/166375
- US-A1- 2008 266 655
- US-A1- 2012 281 264
- US-A1- 2014 263 963
- HUISKEN J ET AL: "Even fluorescence excitation by multidirectional selective plane illumination microscopy (mSPIM)", OPTICS LETTERS, OPTICAL SOCIETY OF AMERICA, US, vol. 32, no. 17, 1 September 2007 (2007-09-01), pages 2608 - 2610, XP002508397, ISSN: 0146-9592, [retrieved on 20070827], DOI: 10.1364/OL.32.002608
- OBER R J ET AL: "Simultaneous Imaging of Different Focal Planes in Fluorescence Microscopy for the Study of Cellular Dynamics in Three Dimensions", IEEE TRANSACTIONS ON NANOBIOSCIENCE, IEEE SERVICE CENTER, PISCATAWAY, NY, US, vol. 3, no. 4, 1 December 2004 (2004-12-01), pages 237 - 242, XP011122942, ISSN: 1536-1241, DOI: 10.1109/TNB.2004.837899
- KAVYA MOHAN ET AL: "Three Dimensional Fluorescence Imaging Using Multiple Light-Sheet Microscopy", PLOS ONE, vol. 9, no. 6, 9 June 2014 (2014-06-09), pages e96551, XP055277114, DOI: 10.1371/journal.pone.0096551

## Beschreibung

Die Erfindung liegt auf dem Gebiet der Lichtblattmikroskopie, und insbesondere betrifft sie ein Lichtblattmikroskop, mit dem bei gleichbleibender Lichteffizienz mehr Information über ein Objekt gewonnen werden kann oder bei gleichbleibender Information eine erhöhte Lichteffizienz zur Verfügung gestellt werden kann. Außerdem betrifft die Erfindung ein Verfahren auf Grundlage dieses Lichtblattmikroskops.

Bei der Lichtblatt- oder Lichtscheiben-Mikroskopie bzw. Lichtscheibenfluoreszenzmikroskopie (FSFM) bzw. Single Plane Illumination Microscopy (SPIM), handelt es sich um ein fluoreszenzmikroskopisches Verfahren, bei dem nur eine dünne Schicht von typischerweise einigen Mikrometern in einer Probe beleuchtet wird. Im Vergleich zur herkömmlichen Auflicht- oder Durchlicht-Fluoreszenzmikroskopie führt dies zu besserer Auflösung und deutlich vermindertem Bildhintergrund. Außerdem werden negative Effekte durch Bleichen oder lichtinduzierten Stress in biologischen Proben vermindert. Die Lichtblatt-Mikroskopie wird in der Zellbiologie, für Fluoreszenzuntersuchungen an lebenden Organismen und auf dem Gebiet der Entwicklungsbiologie bei Langzeitbeobachtungen der Embryonalentwicklung in Modellorganismen (Entwicklungsbiologie) eingesetzt.

In einem Lichtblattmikroskop wird die zu detektierende Ebene von der Seite mit einem dünnen Lichtstrahl in Gestalt eines Lichtblatts (Light Sheet) beleuchtet. Beugungsbedingt besteht ein unüberwindbarer Zusammenhang zwischen der Dicke des Lichtblatts und dessen Schärfentiefe. Als Schärfentiefe ist in diesem Zusammenhang die Distanz entlang der Beleuchtungsachse zu verstehen, entlang welcher die Dicke des Lichtblatts nahezu gleich bleibt bzw. die Dicke an der Taille des Strahls nur um den Faktor √2 überschreitet. Diese beschränkt damit auch die maximale Größe eines Objekts bzw. der Objekte, das bzw. die bei guter Abbildungsqualität durch das Detektionsobjektivs des Mikroskops auf einen Sensor abgebildet werden können. Da die Dicke des Lichtblatts direkt den Bildkontrast sowie die Auflösung entlang der Detektionsachse bestimmt, sollte es so dünn wie möglich sein. Insbesondere ist es wünschenswert, dass die Dicke des Lichtblatts kleiner ist als die Schärfentiefe des Detektionsobjektivs, um die unscharfe Abbildung von Teilen des Objektes zu vermeiden. Die Bemühungen vieler Entwickler haben sich in den vergangenen Jahren daher darauf konzentriert, die (effektive) Dicke des Lichtblatts bei gleichbleibender Tiefenschärfe zu reduzieren, was jedoch nur unter hohem technischen Aufwand möglich ist, der außerdem fast immer zu einer höheren Probenbelastung durch das Lichtblatt führt.

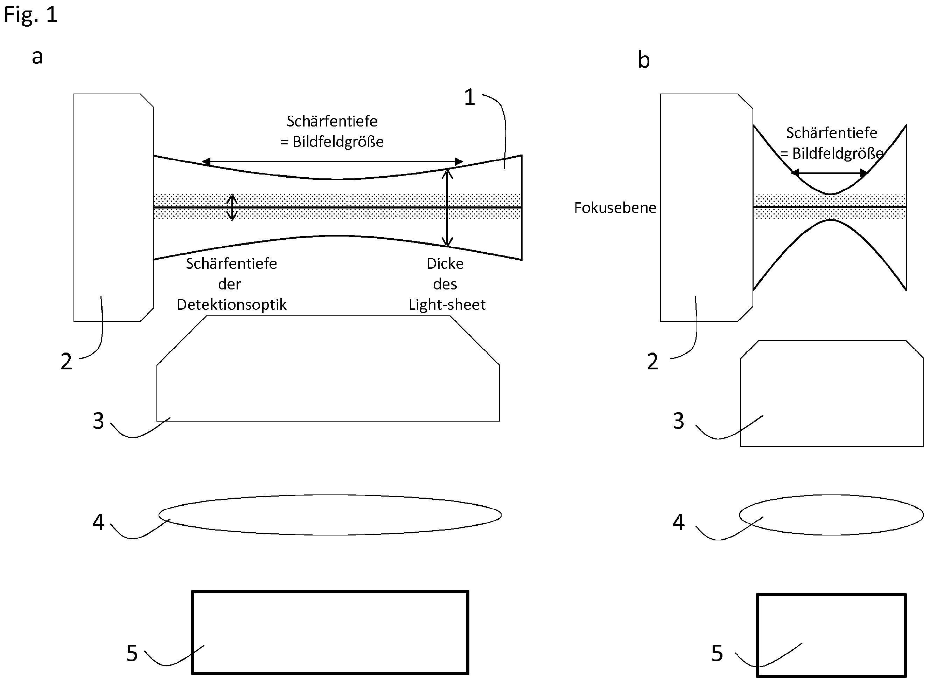

In Fig. 1a wird eine große Probe gezeigt, die durch eine Beleuchtungsoptik 2 mit einem Lichtblatt 1 beleuchtet wird, dessen Dicke die Schärfentiefe einer Detektionsoptik 3 überschreitet. So wird ein Teil des beleuchteten Bereichs über eine Tubuslinse 4 unscharf auf eine Kamera 5 abgebildet. Ein dünneres Lichtblatt 1b führt andererseits, wie in Fig. 1b gezeigt, zu einer geringeren Schärfentiefe und einer stärkeren Konvergenz bzw. Divergenz, so dass nur kleinere Bildfelder mit höherer Auflösung und höherem Kontrast betrachtet werden können. Eine Lösung besteht in der Erhöhung der Schärfentiefe der Detektionsoptik durch Abblenden (Reduktion der numerischen Apertur). Dadurch geht jedoch Auflösung verloren, insbesondere in Form von Information über die Position von Objekten entlang der Detektionsachse, also Tiefeninformation.

Der Stand der Technik zur Lichtblattmikroskopie und dazu verwandter Mikroskopie ist zum Beispiel in den Druckschriften US 7 936 392 B2, EP 2 244 484 B1, EP 2 422 525 B1 und US 2015/0177506A1 offenbart. Zu diesem Stand der Technik gehören ferner die folgenden wissenschaftlichen Publikationen:
- Levoy, M., Zhang, Z. & McDowall, I. Recording and controlling the 4D light field in a microscope using microlens arrays. J. Microsc. 235, 144-162 (2009).
- Broxton, M. et al. Wave optics theory and 3-D deconvolution for the light field microscope. pt. Express 21, 25418 (2013).
- Skupsch, C. & Brücker, C. Multiple-plane particle image velocimetry using a light-field camera. Opt. Express 21, 1726-1740 (2013).
- Prevedel, R. et al. Simultaneous whole-animal 3D imaging of neuronal activity using light-field microscopy. Nature Methods 11, 727-730 (2014).
- P.P. Mondal, S. Dilipkumar and M. Kavya, Efficient Generation of Diffraction-Limited Multi-Sheet Pattern for Biological Imaging, Optics Letters, 40, 609-612 (2015).
- S. B. Purnapatra, M. Kavya and P.P. Mondal, Generation of multiple sheets of light using spatial-filtering techniques, Optics Letters, 39, 4715 (2014).

In der Veröffentlichung von KAVYA MOHAN ET AL: "Three Dimensional Fluorescence Imaging Using Multiple Light-Sheet Microscopy", PLOS ONE, Bd. 9, Nr. 6, 9. Juni 2014 (2014-06-09), Seite e96551, XP055277114, DO1: 10.1371/journal.pone.0096551 ist ein Lichtblattmikroskop bekannt, bei dem eine Beleuchtungslichtverteilung mittels eines Raumfilters in mehrere Lichtblätter aufgespalten wird, die längs der Detektionsachse gleichsam übereinander liegen. Ein Detektionsobjektiv kann längs der optischen Achse bewegt werden, um sukzessive einen mit dem jeweiligen Lichtblatt beleuchteten Probenbereich abzubilden.

Aus der nachveröffentlichten Druckschrift WO 2016/166375 A1 ist ein Lichtblattmikroskop bekannt, bei dem ein Objektbereich, der mehrere voneinander beabstandete Objektschichten umfasst, mit einem Lichtblatt beleuchtet wird. Es ist eine Einstellvorrichtung vorgesehen, die es ermöglicht, die beleuchteten Objektschichten gleichzeitig auf ein Detektorelement abzubilden.

Zum Stand der Technik wird ferner auf die Druckschriften US 2008/266655 A1 und US 2014/263963 A1, die Mikroskope offenbaren, bei denen die Lichtfeldtechnik zum Einsatz kommt, sowie die Druckschrift US 2012/281264 A1, die ein Lichtblattmikroskop offenbart, verwiesen.

Die Aufgabe der vorliegenden Erfindung besteht darin, ein Lichtblattmikroskop sowie ein Verfahren zu dessen Betrieb zu schaffen, das eine besonders wirksame Nutzung der angeregten Fluoreszenz gewährleistet, ohne die Dicke des Beleuchtungsstrahls und damit dessen Schärfentiefe zu reduzieren. Außerdem soll möglichst viel Tiefeninformation über das Objekt / die Objekte gewonnen werden.

Gelöst wird diese Aufgabe hinsichtlich des Lichtblattmikroskops durch die Merkmale des Anspruchs 1 sowie hinsichtlich des Verfahrens durch die Merkmale des Anspruchs 12.

Die Erfindung schafft demnach ein Lichtblattmikroskop mit einem Mittel zum gleichzeitigen Abbilden mehrerer mittels eines Lichtblattes beleuchteter Objektebenen durch eine Kamera mit einer einen Detektionsstrahlengang zwischen dem Lichtblatt und der Kamera festlegenden Detektionsoptik, wobei die Objektebenen um die Fokusebene der Detektionsoptik angeordnet sind.

Mit anderen Worten greift die vorliegende Erfindung die Lichtblatt-Technik zurück, wobei zwischen einer Detektionslinse und einer Kamera ein optisches Mittel platziert wird, das Objektdaten aus mehreren Ebenen eines Objekts gleichzeitig bereitstellt, aus denen nachfolgend in einer Postprocessing-Einheit scharfe Bilder der mehreren Objektebenen gewonnen werden können, die um die Fokusebene der Detektionsoptik zu liegen kommen.

Die vorliegende Erfindung erzielt damit einerseits eine maßgebliche Steigerung der Tiefeninformation bei gleichbleibender Lichteffizienz bzw. eine Steigerung der Lichteffizienz bei gleichbleibender Tiefeninformation. Andererseits wird die simultane Abbildung mehrerer Ebenen ermöglicht, was für viele dynamische Prozesse vorteilhaft oder sogar notwendig ist, insbesondere wenn Ereignisse in verschiedenen Ebenen in Korrelation zueinander gesetzt werden sollen. Das erfindungsgemäße Lichtblattmikroskop erlaubt also die gleichzeitige Abbildung großer Volumina mit erhöhter Geschwindigkeit und ist damit für Aufgabenstellungen wie Tracking (Nachverfolgung) von Organellen in lebenden Zellen und die Beobachtung extrem schneller Prozesse besonders geeignet, bei denen eine serielle Abtastung der benachbarten Ebenen, beispielsweise durch Bewegung des Objektes, des Lichtblatts und damit synchron des Detektionsobjektivs und oder einer Innenfokussierung nicht möglich oder unerwünscht ist.

Die Beleuchtung mehrerer zueinander paralleler Objektebenen in einem Lichtblattmikroskop unter Verwendung eines Raumfilters zur Erzeugung der Objektebenen ist in P.P. Mondal et al und in S. B. Purnapatra et al offenbart.

Auf dem Gebiet der Betrachtung von lebenden Organismen mit einigen 100 µm Größe wurde die Lichtblatt-Technik bisher ausschließlich gepaart mit Weitfeld-Beleuchtung eingesetzt, z.B. durch Prevedel et al, Levoy et al und Broxton et al. Aufgrund der Weitfeld-Beleuchtung weisen die Bilder von dicken Proben, wenn sich die Fluoreszenz im Objekt über mehrere 10 Schärfentiefen entlang der Detektionsachse erstreckt, lediglich einen sehr geringen Kontrast auf.

Alternative Methoden zur synchronen Abbildung mehrerer Ebenen sind z.B. die MFM (Multi Focus Microscopy), die beispielsweise in der US 20130176622 A1 beschrieben ist. Bei diesen Methoden werden 9 oder 25 Ebenen nebeneinander auf einen Sensor abgebildet. Die dazu erforderliche Optik ist jedoch weitaus komplizierter als bei der Lichtfeld-Mikroskopie. Auch MFM basiert auf einer Durchlicht-Beleuchtung oder Epifluoreszenz-Anregung. In der WO 2014/147261 wird die MFM Methode in Kombination mit Lightsheet Beleuchtung beschrieben

In der US 2015/0177506A1 ist ein Verfahren beschrieben, das zur Lichtfeld-Technik verwandt ist. Dieses Verfahren nutzt die Beleuchtung der Probe mit einem Strahlenbündel von der Seite aus. Die aus verschiedenen Raumwinkeln kommenden Anteile werden über eine verschiebbare Aperturblende in der Pupille des Detektionsobjektivs gefiltert. Dies hat den Nachteil der sequentiellen Aufnahme der verschiedenen Probenanteile wohingegen in einem Lichtfeld-Mikroskop eine stark parallelisierte Bildaufnahme bevorzugt wird (single-shot).

Skupsch et al präsentierten einen Aufbau zur PIV (Particle Imaging Velocimetry), bei dem die Probe von der Seite durch eine Zylinderlinse mit mehreren Lichtblättern beleuchtet wird und die Detektion über ein Mikrolinsenarray und Rekonstruktion entsprechend der Lichtfeld-Technik durchgeführt wird.

Gemäß der Erfindung ist vorgesehen, dass zum gleichzeitigen Abbilden mehrerer mittels eines Lichtblattes beleuchteter Objektebenen im Strahlengang zwischen der Detektionsoptik und der Kamera angeordnet ein Mikrolinsenarray (MLA) angeordnet ist, das vorzugsweise in die Kamera integriert ist. Das Mikrolinsenarray ist bezogen auf den Strahlengang unter Abstand vor der Kamera angeordnet.

Es können zwei unterschiedliche Arten der Rekonstruktion zum Einsatz kommen. Die zu verwendende Methode hängt eng mit der gewählten Position des Mikrolinsenarrays zusammen. Das Mikrolinsenarray kann in der Bildebene der Tubuslinse (TL) angeordnet sein bzw. an der Stelle der Detektionsoptik, an der für eine herkömmliche Bildaufnahme ein Bildsensor (S) bzw. eine Kamera positioniert würde. Der Bildsensor wird dann im Abstand der Brennweite der Mikrolinsen positioniert. Diese Aufstellung soll hier als Typ A bezeichnet werden. Der Nachteil dieser Methode besteht in der Tatsache, dass die Pixelzahl (und damit die Auflösung) der Bilder einzelner Objektebenen, 1:1 mit der Zahl der Mikrolinsen skaliert. Die Zahl der Pixel pro Bild ist also gleich der Zahl der Mikrolinsen und die Zahl der auflösbaren Ebenen skaliert mit dem Verhältnis der Kantenlängen von Pixeln und Mikrolinsen. Beispielsweise können 5 Ebenen aufgelöst werden, wenn die Kantenlänge einer Mikrolinse 5 Pixeln auf dem Sensor entspricht.

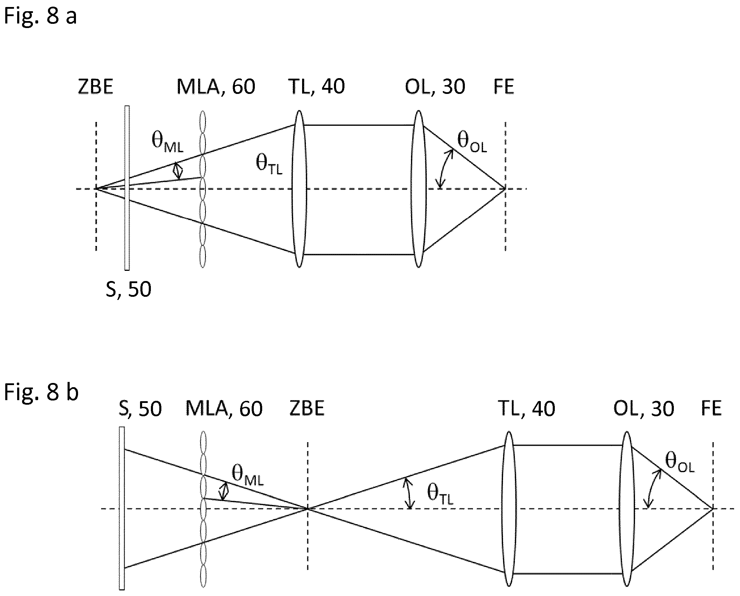

Bei dem beanspruchten Lichtblattmikroskop sind die Mikrolinsenarrays so positioniert, dass sie mit der Tubuslinse zusammen ein Teleskop ergeben. Das Mikrolinsenarray bildet dabei das (virtuelle) Bild der Tubuslinse auf den Sensor ab (Typ B) wie in Fig. 8 dargestellt. Die Bildrekonstruktion erfolgt mit einem entsprechend angepassten Rekonstruktionsalgorithmus. Dieser ermittelt die Position der Bilder eines Punktes im Objekt in den Bildern mehrerer Mikrolinsen und kann daraus auf die Position im Objekt zurückrechnen, z.B. über Triangulation und unter Ausnutzung der Parallaxe. Die z-Auflösung und damit die Zahl der auflösbaren Ebenen ist in diesem Fall durch den Abstand der Bilder desselben Objektpunktes durch verschiedene Mikrolinsen (Basislänge bei der Triangulation) gegeben. Die Identifikation eines Objektpunktes in den Bildern verschiedener Mikrolinsen setzt die Verfügbarkeit von Merkmalen des Objektpunktes voraus, die eine Korrelation zwischen den Bildern der einzelnen Mikrolinsen erlauben. Es muss also möglich sein, die mehreren Bilder eines Punktes im Objekt einer Punktlichtquelle zuzuordnen. Mit anderen Worten: Durch den Ort auf dem Sensor hinter einer Mikrolinse an dem ein Objektpunkt abgebildet wird, wird im Objektvolumen ein linienförmiger Bereich (bzw. dem Bereich der der Mikrolinse zugehörigen PSF (Point Spread Function) im Objektvolumen) definiert entlang dessen der abgebildete Objektpunkt sich befinden kann. Ein zweiter solcher linienförmiger Bereich wird durch die Position des Bildes desselben Objektpunktes auf dem Sensor hinter einer anderen Mikrolinse definiert. Der Objektpunkt muss dann also im Schnittpunkt der beiden linienförmigen Bereich liegen.

Die Brennweite und der Durchmesser bzw. die Blendenzahl der Mikrolinsen und die Lage des MLA entlang der optischen Achse sind wichtige Aspekte, die die Qualität der Abbildung hauptsächlich beeinflusst. Bei Verwendung des Typs A entspricht die Blendenzahl der Mikrolinsen idealerweise der Blendenzahl der Tubuslinse. Bei Typ B ist vor allem die Position des Mikrolinsenarrays relativ zum Sensor sowie der Durchmesser der Mikrolinsen des Mikrolinsenarrays wichtig, wie weiter unten noch erläutert wird. Die Trennbarkeit von Objektpunkten (Auflösung der Optik) hängt von der Spotgröße der Bilder der Objektpunkte auf dem Sensor und deren Abstand ab. Diese werden durch Brennweite und Durchmesser bzw. die Blendenzahl der Mikrolinsen und die Lage des MLA entlang der optischen Achse bestimmt.

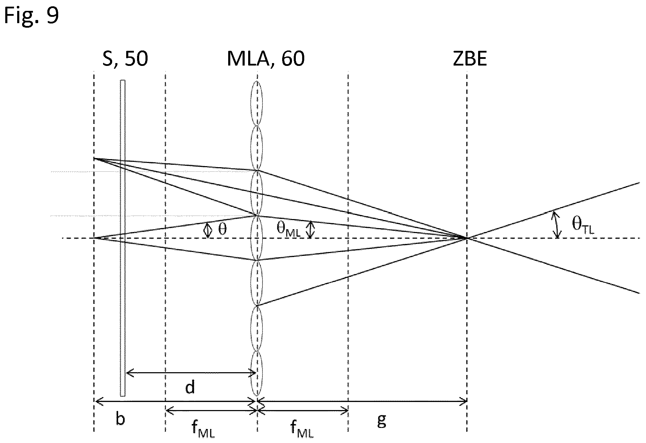

Der Durchmesser der Spotgröße s in geometrischer Näherung für Mikrolinsendurchmesser v, Brennweite der Mikrolinsen *f*_{ML}, Abstand d des Sensors von der Zwischenbildebene (ZBE) in Abhängigkeit von g, also dem Abstand des Zwischenbildes vom MLA ergibt sich aus $s = v \left(1-d/b\right)$ mit 1/*f*_{ML} = 1/*b* + 1/g, also *b* = *g f*_{ML} / (g - *f*_{ML}). Die Größen sind in Fig. 9 gekennzeichnet.

Veränderungen von *g* ergeben sich aus der Lage Δ*z* der Punktlichtquelle im Objekt entlang der optischen Achse z gegenüber der Fokusebene (FE) des Objektivs (OL) durch Δ*g* = *- M*² *Δz,* solange die Werte von Δ*z* klein sind.

Wenn das MLA und der Sensor so positioniert werden, dass der Abstand des MLA zur ZBE etwa gₒₚₜ entspricht werden Punktlichtquellen (PLQ) in der Fokusebene scharf auf den Sensor abgebildet. Weiter entfernte PLQs werden mit wachsendem Abstand dz zur Fokusebene unschärfer abgebildet, wobei dann gilt: dz = (g-gₒₚₜ) M² bzw. $g = {g}_{opt} - dz {M}^{2} .$

Diese Abschätzung reicht grundsätzlich aus, um den Bereich zu ermitteln, in dem eine bestimmte Spotgröße auf dem Sensor nicht überschritten wird, wobei natürlich die Grenzen der Gültigkeit der geometrischen Optik berücksichtigt werden müssen.

Zum Beispiel wird in einer Ausführung der Abstand zwischen MLA und Sensor *d* so gewählt, dass Objekte in der Fokusebene des Objektivs scharf auf den Sensor abgebildet werden, also dass für Δz=0 und Δ*g*=0 eine Distanz g des Zwischenbildes vom Mikrolinsenarray sich so ergibt, dass b=d, also d = g f_{ML} / (g - f_{ML}) ist. Die Schärfe der Abbildung (der Spotdurchmesser s) nimmt nun ab (die Spotgröße s nimmt zu) wenn g verringert oder erhöht wird.

Der Abstand d ist so gewählt, dass d = g f_{ML} / (g - f_{ML}) wobei g eine Zwischenbildebene definiert, die einer Ebene im Objekt entspricht, die für ein Galilei-Teleskop (Fig. 8a) etwas näher am bzw. für ein Kepler-Teleskop (Fig. 8b) etwas weiter entfernt vom Detektionsobjektiv liegt, als dessen Fokusebene. Dann liegen Ebenen, die etwas weiter weg vom bzw. etwas näher am Objektiv liegen, in einem Bereich mit guter Auflösung und sind eindeutig rekonstruierbar.

Ein feste Grenze stellt dabei dar, dass g nur soweit verringert werden sollte (oder der Betrag von Δg erhöht werden), dass *g > f* erfüllt bleibt (insbesondere im Falle eines Kepler-Teleskops. Sonst wird durch die große Spotgröße auf dem Sensor eine eindeutige Rekonstruktionen erschwert. In diesem Bereich ist dann auch die Auflösung äußerst schlecht.

Eine weitere wichtige Größe betrifft die Zahl der Mikrolinsen, die einen Objektpunkt abbilden, also die Apertur des Objektivs entlang einer Querachse zur optischen Achse unterteilen. Diese Zahl ergibt sich auch aus dem Quotienten des Auffangwinkels der Mikrolinsen θ_{ML}=arctan(*v*/2*g*) und dem Auffangwinkel der Tubuslinse θ_{TL}=arctan(d_{TL/}2/(f_{TL}-Δg)), wobei *d* die Apertur der Tubuslinse ist. Die Spotgröße und Auflösung auf dem Sensor ist zwar unabhängig von θ_{ML}/θ_{TL}, aber die entsprechende PSF im Objektvolumen ist näherungsweise gegeben durch 0.61λ/NA x θ_{ML}/θ_{TL}.

Der Betrag von Δ*g* kann für Objekte in Ebenen weit abseits der Fokusebene bzw. mit großem Δz so groß werden, dass θ_{ML}<<θ_{TL} und jeweils sehr viele Mikrolinsen einen Objektpunkt abbilden, wodurch das Signal in jedem einzelnen Bild sinkt und die Auflösung ebenfalls weit abfällt.

Die Bedeutung der oben beschriebenen Abschätzungen im Rahmen der Erfindung liegt darin, dass bei einer Lichtblattbeleuchtung im Gegensatz zu den bisher in diesem Kontext verwendeten Beleuchtungsarten (Epifluoreszenzanregung) die Dicke des beleuchteten Bereichs genau auf den Schärfentiefe-Bereich der Detektionsoptik abgestimmt werden kann (oder umgekehrt). Es werden also nur Bereiche beleuchtet, in denen eine (a) eindeutige Zuordnung möglich ist und (b) eine möglichst hohe Auflösung erreicht wird.

Punkt (a) wird dadurch erreicht, dass Objektpunkte, deren Zwischenbild zu nah am Mikrolinsenarray liegt (g<f), nicht beleuchtet werden. Dadurch werden Artefakte in der Rekonstruktion vermieden. Punkt (b) wird erreicht, indem nur Objektpunkte in einem Bereich beleuchtet werden, der so liegt, dass die Objektpunkte jeweils nur durch eine geringe Zahl von z.B. 2 bzw. 3 Mikrolinsen entlang einer Querachse zur optischen Achse abgebildet werden (also insgesamt durch ca. 4-7 Mikrolinsen). Wie weiter oben beschrieben sollte dieser beleuchtete Bereich idealerweise noch so eingeschränkt bzw. auf das MLA angepasst werden, dass die Spotgröße einen annehmbaren Wert, z.B. das doppelte des Minimalwertes, nicht überschreitet.

Für die oben erläuterte vorteilhafte selektive und gezielte Beleuchtung von einem engen Bereich um die Fokusebene des Detektionsobjektivs kommt erfindungsgemäß idealerweise eine Lichtblattbeleuchtung in Frage.

Allgemein kommt die Verwendung von zwei unterschiedlichen Typen von Mikrolinsenarrays in Frage, nämlich solche, die lediglich Mikrolinsen mit einer einzigen Brennweite aufweisen, vorliegend auch als homogene Arrays bezeichnet, und solche mit Linsen mehrerer verschiedener Brennweiten, z.B. mit drei unterschiedlichen Brennweiten, vorliegend auch als heterogene Mikrolinsenarrays bezeichnet. Die Vorteile der Verwendung von komplexeren Arrays mit verschiedenen Mikrolinsen bestehen in der höheren erreichbaren Auflösung der rekonstruierten Bilder, da die Spotgröße auf dem Sensor auch von der Brennweite abhängt. Bei dem beanspruchten Lichtblattmikroskop kommen nur homogene Arrays zum Einsatz.

Die vorliegende Erfindung diskutiert darüber hinaus vorteilhafte Strahlprofile, was im Kontext der Kombination von Lichtblatt-Mikroskopie neu ist.

Bei dem beanspruchten Lichtblattmikroskop ist es vorgesehen, im Detektionsstrahlengang zwischen Detektionsoptik und Kamera mit dem Zweck ein Mikrolinsenarray einzuführen, durch Post-Processing der mit der Kamera aufgenommen Rohdaten Bilder von mehrere Objektebenen zu erzeugen, die um die ursprüngliche Fokusebene der Detektionsoptik angeordnet sind. Bevorzugt kann das Mikrolinsenarray Teil des Lichtfeldmikroskops bilden.

Vorteilhafterweise, u.a., um eine hohe Packungsdichte der Mikrolinsen und damit eine hohe Auflösung in den Ebenen zu gewährleisten, in der sie zu liegen kommen, sind die Zentren der Mikrolinsen des Mikrolinsenarray auf einem rechteckigen bzw. quadratischen Gitter oder alternativ auf einem hexagonalen Gitter angeordnet. Um eine hohe Packungsdichte zu gewährleisten, sind die Mikrolinsen auf einem hexagonalen Gitter angeordnet. Standardmäßig sind die Linsen jedoch auf einem quadratischen Gitter angeordnet. Für eine Rekonstruktion, bei der das MLA in der Bildebene steht, ist das quadratische Gitter üblich, weil es dann einfacher ist, das hinter jeder Mikrolinse aufgesammelte Licht einem Pixel in einem ,gewöhnlichen' Bild mit quadratischen Pixeln zusammenzufassen. Für die Anordnung, bei der das MLA abbildet, ist eine hexagonale Struktur bevorzugt.

Vorteilhafterweise sind die Detektionsoptik des Mikroskops und das Mikrolinsenarray derart ausgelegt und aufeinander abgestimmt sind, dass bei einem Beleuchtungsstrahl einer FWHM-Schärfentiefe von etwa 300µm (entspricht einer numerischen Apertur von ≈ 0.06) durch die Kamera Bilder von drei Ebenen im einem Abstand von 2µm oder Bilder von fünf Ebenen mit einem Abstand von 1µm erzeugt werden. Dabei wird im Rahmen dieser Erfindung idealerweise eine Kombination von Mikroskop-Detektionsoptik und Mikrolinsenarray verwendet, die über einen Bereich von 4µm 3 bzw. 5 Einzelbilder jeweils mit einer Schärfentiefe von 1µm erzeugt. Im Gegensatz zu Skupsch et al liegt die Schärfentiefe der Einheit aus Detektionsoptik und Mikrolinsen-Array also deutlich unterhalb der Ausdehnung des Objektes (oder eines interessierenden Objektbereichs) entlang der Detektionsachse. Es kann auch eine Kombination mit kürzerer oder längerer Schärfentiefe verwendet werden.

Ein Problem bei der Beleuchtung mit einem Strahl mit Gauß'schem Profil besteht darin, dass einzelne Objektebenen entlang der Beleuchtungsachse nicht mit gleichmäßiger Intensität und benachbarte Ebenen nicht mit der gleichen Leistung beleuchtet werden. Um dieses Problem zu überwinden, sind erfindungsgemäß Mittel vorgesehen, das Gauß'sche Profil des Beleuchtungsstrahls derart zu homogenisieren, dass das gesamte Bildfeld mit einem im Wesentlichen entlang der Detektionsachse gleichen Strahlprofil beleuchtet werden. Idealerweise werden auch sämtliche abzubildenden Ebenen mit einer im Wesentlichen gleichen Lichtintensität ausgeleuchtet. Eine vorteilhafte Ausführungsform der Strahlprofil-Homogenisationsmittel bildet ein im Beleuchtungsstrahlengang angeordnetes strahlformendes optisches Element, das dazu ausgelegt ist, dem Beleuchtungsstrahl ein Top-Hat Profil zu verleihen, dessen Breite derart gewählt ist, dass sämtliche abzubildenden Ebenen mit im Wesentlichen derselben Lichtintensität ausgeleuchtet werden. Alternativ dazu sehen die Strahlprofil-Homogenisationsmittel ein im Beleuchtungsstrahlengang angeordnetes optisches Element, wie etwa eine TAG-Linse oder eine ETL (elektrisch durchstimmbare Linse) vor, das den Beleuchtungsstrahl axial mit hoher Frequenz derart vor und zurück verschiebt, dass sämtliche abzubildenden Ebenen mit im Wesentlichen derselben Lichtintensität ausgeleuchtet werden. Dies ist insbesondere unter der Voraussetzung vorteilhaft, dass das laterale Profil entlang der Beleuchtungsachse Modulationen aufweist, die man ausgleichen/verschmieren möchte.

Ein alternativer Aufnahme-Modus könnte auch darin bestehen, mehrere Ebenen zu beleuchten und synchron zu detektieren, die weiter voneinander entfernt sind, als es bei der effektiven Tiefenschärfe des Detektionsobjektivs (und Mikrolinsenarrays) notwendig wäre um entlang der Detektionsachse gemäß Nyquist-Theorem abzutasten. In diesem Fall könnte ein Bilderstapel derart aufgenommen werden, dass das Objekt relativ zur Fokusebene des Detektionsobjektivs in Schritten verschoben wird, die ein Nyquist-Sampling erlauben, jedoch kleiner sind als der Abstand der in einem Schritt / für eine Position detektierten Ebenen. Dadurch werden zwar benachbarte Ebenen nicht mehr zeitgleich aufgenommen, aber es sind weniger Rohbilder notwendig um große Volumina abbilden zu können wodurch die Geschwindigkeit erhöht werden kann.

Ein klarer Vorteil entsteht bei der Kombination von Light-Field Kameras mit Light-Sheet Beleuchtung dadurch, dass die Schärfentiefe des Detektionsoptik stark erhöht werden kann. Es können Ebenen synchron abgebildet und beleuchtet werden, deren Abstand deutlich größer ist als die Tiefenschärfe der ,normalen' Detektionsoptik (reines Objektiv ohne Mikrolinsenarray). Innerhalb dieser erhöhten Schärfentiefe kann das Light-sheet auch strukturiert sein um eine bessere Lokalisation der Position entlang der Detektionsachse zu ermöglichen.

Die Beleuchtung von mehreren Ebenen ist natürlich auch mit anderen Strahlen als Gauß-Strahlen möglich. Wie oben erwähnt, empfehlen sich möglichst flache Strahlprofile. Alternativ kommen jedoch auch Bessel- und Bessel-ähnliche Strahlen in Betracht. Die Ringstruktur der Bessel-Strahlen wird dabei derart an die Detektionsoptik angepasst, dass jeder Ring eine andere Ebene beleuchtet. In diesem Fall wären zur Beleuchtung insbesondere solche Strahlen wünschenswert, die z.B. als Interferenzmuster verschiedener Teilstrahlen ein Streifenmuster entlang der Detektionsebene erzeugen. Dies kann z.B. auch durch einfache Zweistrahlen-Interferenz erreicht werden. Besonders vorteilhaft ist der Einsatz eines Mathieu-Strahls beziehungsweise eines Strahls, dessen Winkelspektrum aus zwei entgegengesetzten, symmetrisch um den Ursprung angeordneten Ring-Segmenten besteht. Die Orientierung der Ringsegmente ist so zu wählen, dass sich im Bereich um die optische Achse der Beleuchtung ein Streifenmuster entlang der Detektionsachse mit dem Ziel ausbildet, eine Strahlformung bereitzustellen, die eine möglichst gleich starke und gleichmäßige Beleuchtung der verschiedenen detektierten Ebenen ermöglicht.

Gemäß einer weiteren vorteilhaften Ausbildung des erfindungsgemäßen Mikroskops wird der Detektionsstrahlengang durch eine einen Strahlteiler aufweisende Strahlteilerkonfiguration in einen weiteren zur Kamera über das Mikrolinsenarray führenden Detektionspfad und in einen Detektionspfad aufgespalten, der ohne Vorschaltung eines Mikrolinsenarrays zu einer Kamera führt. Dies erlaubt eine hochauflösende Abbildung der Probe in der Fokusebene der Detektionsoptik zusätzlich zu der Abbildung mittels der Kamera mit vorgeschaltetem Mikrolinsenarray in relativ reduzierter Auflösung.

Die Strahlteilerkonfiguration zur Erzeugung von zwei Detektionspfaden kann unter Verwendung von Spiegeln vorteilhafterweise derart ausgelegt sein, dass der Detektionspfad mit, wie auch der Detektionspfad ohne Mikrolinsenarray auf dieselbe Kamera nebeneinander abgebildet werden. Die Erfindung stellt außerdem ein Verfahren zum gleichzeitigen Abbilden mehrerer mittels eines Lichtblattes beleuchteter Objektebenen unter Verwendung des erfindungsgemäßen Lichtblattmikroskops bereit, bei dem Objektvolumina der Lichtblattstruktur entsprechend schichtweise detektiert und abgebildet. Die Erfindung stellt außerdem ein Verfahren zum gleichzeitigen Abbilden mehrerer mittels eines Lichtblattes beleuchteter Objektebenen unter Verwendung des erfindungsgemäßen Lichtblattmikroskops bereit, bei dem Objektvolumina der Lichtblattstruktur entsprechend schichtweise detektiert und abgebildet.

Anstelle von Strahlteilern können auch Klappspiegel verwendet werden um wahlweise den Strahlengang mit Mikrolinsen-Array oder den Strahlengang ohne Mikrolinsen-Array nutzen zu können. Die beiden Strahlengänge können auch unterschiedliche Vergrößerungen ausweisen, beispielsweise durch unterschiedliche Brennweitenkombinationen der Linsen oder durch zusätzlich integrierte Teleskope.

Bei diesem Verfahren werden Objektvolumina vorteilhafterweise durch eine Bewegung der detektierten Objektebenen relativ zum Objekt auf die Kamera zeitlich aufeinanderfolgend abgebildet.

Alternativ dazu werden die Objektvolumina synchron detektiert und abgebildet, indem mehrere beleuchtete Objektebenen gleichzeitig detektiert werden, die weiter voneinander entfernt sind, als es bei der effektiven Tiefenschärfe der Detektionsoptik ohne Mikrolinsenarray notwendig wäre, um entlang der Detektionsachse gemäß dem Nyquist-Theorem abzutasten.

Vorteilhafterweise werden zur Abbildung großer Objektvolumina Bilderstapel derart detektiert und aufgenommen, dass das Objekt relativ zur Fokusebene der Detektionsoptik in Schritten verschoben wird, die ein Nyquist-Sampling erlauben, die jedoch kleiner sind als der Abstand, der in einem Schritt für eine Position detektierten Ebenen.

Vorteilhafterweise umfasst das erfindungsgemäße Lichtblattmikroskop einen Scanspiegel im Beleuchtungsstrahlengang mit dessen Hilfe das Lichtblatt entlang der Detektionsachse verschoben werden kann. Es ist damit möglich, mehrere Ebenen in der Probe gezielt nacheinander zu beleuchten und für jede Position des Lichtblattes ein Bild mit der Kamera aufzunehmen. Das Mikrolinsenarray wird in diesem Fall zur Erhöhung der Schärfentiefe genutzt. Unabhängig von der Position des Lichtblatts kann aus den vom Sensor aufgenommenen Daten das Bild einer oder mehrerer Objektebenen innerhalb des beleuchteten Volumens rekonstruiert werden. Entscheidend in diesem Fall der Anwendung ist, dass das Lichtblatt deutlich schmäler ist als die Tiefenschärfe der Detektionsoptik, die mindestens ein Objektiv, ein Mikrolinsenarray und bevorzugt eine Tubuslinse umfasst.

Nachfolgend wird die Erfindung anhand der Zeichnungen näher erläutert; in diesen zeigen:
- Fig. 1a und 1b: das Prinzip eines herkömmlichen Lichtblattmikroskops mit unterschiedlich dickem Lichtblatt,
- Fig. 2: das Prinzip des erfindungsgemäßen Lichtblattmikroskops,
- Fig. 3: unterschiedliche Strahlprofile des von der Beleuchtungsoptik des Lichtblattmikroskops von Fig. 2 erzeugten Beleuchtungsstrahls,
- Fig. 4: mit der Kamera des Lichtblattmikroskops von Fig. 2 durch seine Detektionsoptik und sein Mikrolinsenarray erzeugte Bilder von drei Objektebenen,
- Fig. 5: eine Ausführungsform des erfindungsgemäßen Lichtblattmikroskops mit einem Lichtblatt, das senkrecht zur Bildfeldgröße durch eine Probe bewegbar ist,
- Fig. 6: eine Ausführungsform des erfindungsgemäßen Lichtblattmikroskops mit einer einen Strahlteiler oder Klappspiegel aufweisenden Strahlteilerkonfiguration im Detektionsstrahlengang zur Erzeugung von zwei zu unterschiedlichen Kameras führenden Detektionspfaden,
- Fig. 7: eine Ausführungsform des erfindungsgemäßen Lichtblattmikroskops mit einer einen Strahlteiler oder Klappspiegel aufweisenden Strahlteilerkonfiguration im Detektionsstrahlengang zur Erzeugung von zwei auf denselben Sensor führenden Detektionspfaden, und
- Fig. 8 und 9: jeweils eine schematische Illustration der Anordnung eines Mikrolinsenarrays im optischen Strahlengang.

Das in Fig. 1a und 1b gezeigte Prinzip eines herkömmlichen Lichtblattmikroskops ist bereits einleitend erläutert.

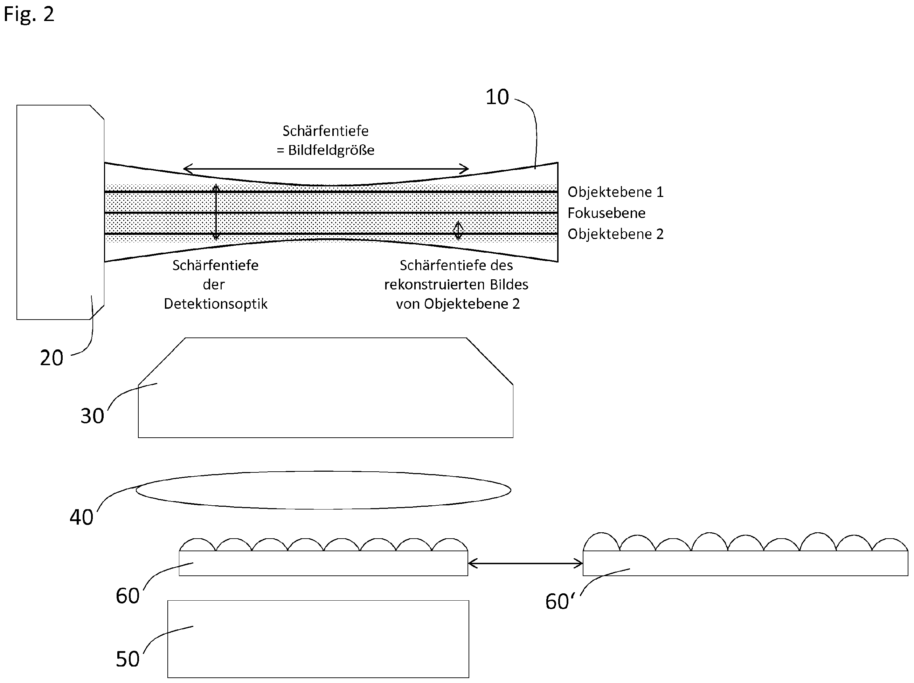

Fig. 2 zeigt das Prinzip des erfindungsgemäßen Lichtblattmikroskops, das, wie das Mikroskop von Fig. 1a/1b eine Beleuchtungsoptik 20 zur Erzeugung eines Lichtblatts 10, eine Detektionsoptik 30 mit einer Tubuslinse 40 sowie eine Kamera 50 in Gestalt eines Flächendetektors bzw. Sensors umfasst. Zusätzlich umfasst das Lichtblattmikroskop ein Mikrolinsenarray 60 im Strahlengang zwischen der Tubuslinse 40 und der Kamera 50. Das Mikrolinsenarray 60, das vorzugsweise in die Kamera 50 integriert ist, wodurch diese eine Lichtfeldkamera bildet, dient als Mittel zum gleichzeitigen Abbilden mehrerer mittels des Lichtblatts 10 beleuchteter Objektebenen (Objekteben 1, Objektebene 2) über die Detektionsoptik 30 durch die Kamera 50, wobei die Objektebenen 1 und 2 um die Fokusebene der Detektionsoptik angeordnet sind, die in herkömmlicher Weise eine Objektebene festlegt.

Das in Fig. 2 im Strahlengang angeordnet gezeigte Mikrolinsenarray 60 umfasst eine Mehrzahl von Mikrolinsen mit derselben Brennweite, wie durch gleich große halbkugelförmige Mikrolinsenkörper schematisch dargestellt. Die Zentren der Mikrolinsen des Mikrolinsenarrays 60, 60' sind auf einem rechteckigen bzw. quadratischen oder alternativ auf einem hexagonalen Gitter angeordnet.

Im in Fig. 2 gezeigten Beispiel sind die Detektionsoptik 30 und die Tubuslinse 40 des Mikroskops und das Mikrolinsenarray 60, 60' derart ausgelegt und aufeinander abgestimmt sind, dass bei einem Beleuchtungsstrahl einer FWHM-Schärfentiefe von etwa 300µm (entspricht einer numerischen Apertur von ≈ 0.06) durch die Kamera Bilder von drei Ebenen im einem Abstand von 2µm erzeugt werden. Alternativ können durch entsprechende Auslegung der Detektionsoptik 30 und des Mikrolinsenarray 60, 60' Bilder von fünf Ebenen mit einem Abstand von 1µm erzeugt werden oder 10 Ebenen im Abstand von 0.5 µm.

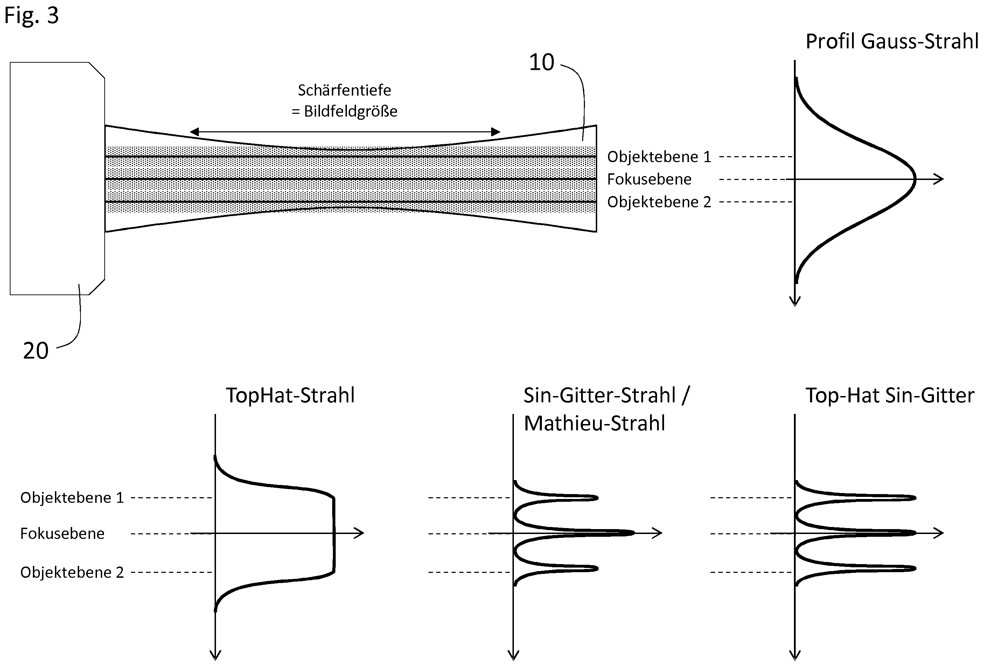

Fig. 3 zeigt für das Lichtblattmikroskop von Fig. 2, dass der durch die Beleuchtungsoptik 20 in Gestalt eines Lichtblatts 10 erzeugte Beleuchtungsstrahl typischerweise ein Gauß'sches Profil aufweist, das zur Folge hat, dass die verschiedenen Objektebenen mit deutlich unterschiedlicher Intensität beleuchtet werden. Um diese Beleuchtungsunterschiede möglichst effektiv auszugleichen sind Mittel vorgesehen, das Gauß'sche Profil des Beleuchtungsstrahls derart zu homogenisieren, dass sämtliche abzubildenden Ebenen mit im Wesentlichen derselben Lichtintensität ausgeleuchtet werden.

Bei dem Strahlprofil-Homogenisationsmittel handelt es sich um ein im Beleuchtungsstrahlengang angeordnetes strahlformendes optisches Element (nicht gezeigt), das dazu ausgelegt ist, dem Beleuchtungsstrahl mit ursprünglich Gauß'schem Strahlprofil ein Top-Hat Profil zu verleihen, dessen Breite derart gewählt ist, dass sämtliche abzubildenden Ebenen zumindest im Zentrum des Bildfeldes mit im Wesentlichen derselben Lichtintensität ausgeleuchtet werden.

Alternativ kann das Strahlprofil-Homogenisationsmittel ein im Beleuchtungsstrahlengang angeordnetes optisches Element, wie etwa eine TAG-Linse oder eine ETL (elektrisch abstimmbare Linse) umfassen, das den Beleuchtungsstrahl axial während der Belichtungszeit der Kamera kontinuierlich oder in Schritten derart entlang der Beleuchtungsrichtung verschiebt, so dass sämtliche abzubildenden Ebenen mit im Wesentlichen derselben Lichtintensität ausgeleuchtet werden. Zwei daraus resultierende Strahlprofile mit einem Streifenmuster mit jeweils drei Strahlmaxima im Bereich der Objektebenen sind in Fig. 2 in Gestalt eines Sin-Gitter-/Mathieu-Strahlprofils und eines Top-Hat Sin-Gitter-Strahls gezeigt. Das entsprechende Streifenmuster, das eine im Wesentlichen gleich starke Beleuchtung der Detektions- bzw. Objektebenen gewährleistet, kann etwa durch Zweistrahl-Interferenz entlang der jeweiligen Detektionsebene erzeugt werden. Die Amplitude der Bewegung des Beleuchtungsstrahls ist dabei entweder an die Größe des Bildfeldes angepasst oder an die zu verwischende axiale Struktur des Beleuchtungsstrahls. Weist der Strahl beispielsweise eine Modulation der Intensität entlang der Beleuchtungsachse mit einer Periode von p auf, so wird der Strahl p verschoben, bei einer Modulation mit einer räumlichen Grenzfrequenz von k um mindestens 1/k.

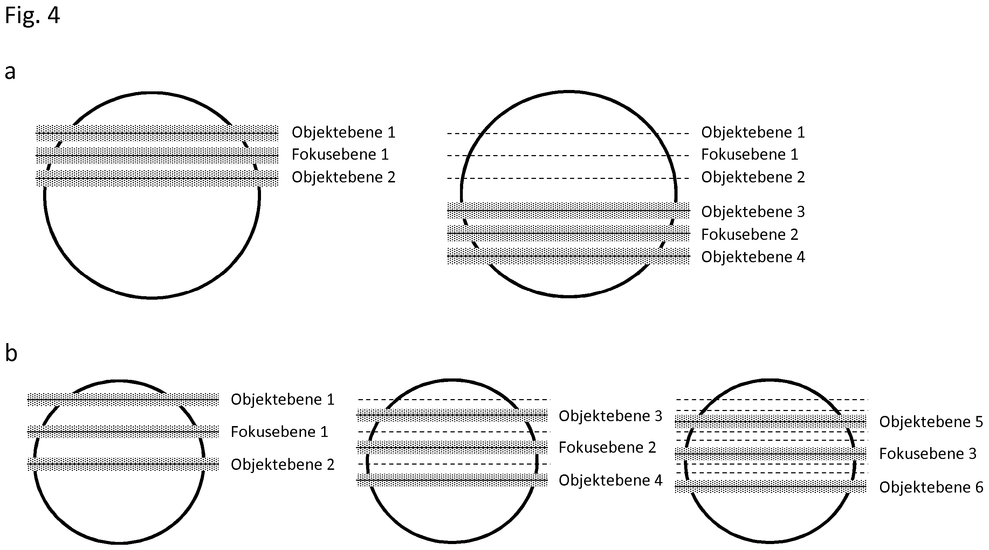

Fig. 4 zeigt mit der Kamera 50 des Lichtblattmikroskops von Fig. 2 durch die Detektionsoptik 30 und das Mikrolinsenarray 60, 60'erzeugte Bilder der drei Objektebenen (Objektebene 1 und 2 und Fokusebene entsprechend der dritten Objektebene) in unterschiedlichen Lagen und mit unterschiedlichen gegenseitigen Abständen. Diese unterschiedlichen Objektebenen-Lagen und - Abstände lassen sich durch entsprechende Abstimmung und Auslegung von Detektionsoptik und Mikro-Linsenarray erzielen sowie durch die Anpassung des Rekonstruktionsalgorithmus.

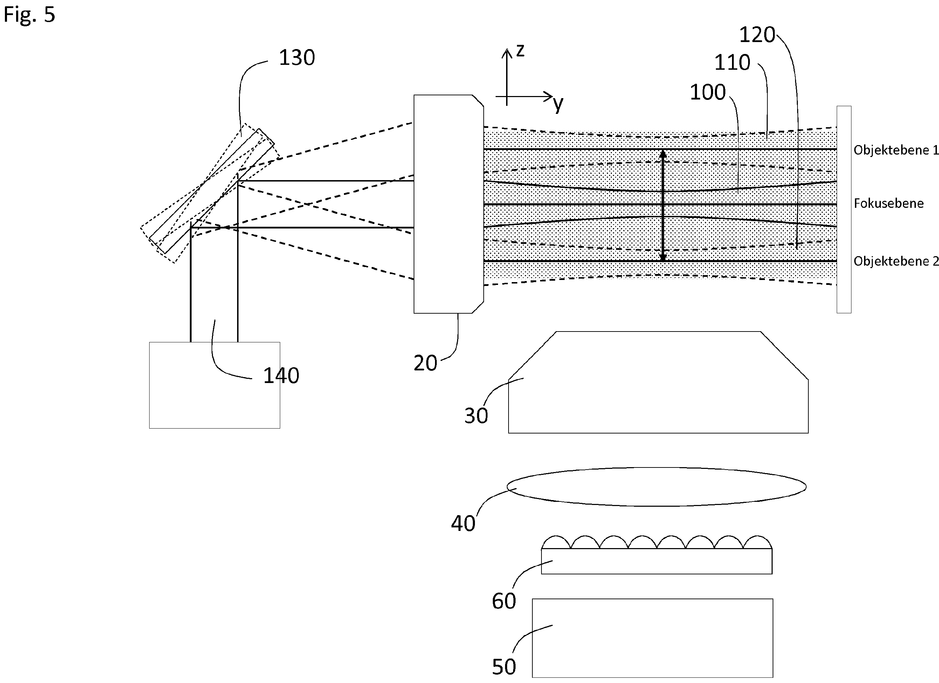

Fig. 5 zeigt eines Ausführungsform des erfindungsgemäßen Lichtblattmikroskops, das dazu ausgelegt ist, das Lichtblatt senkrecht zur Ausbreitungsrichtung y durch eine Probe zu verschieben oder zu versetzen. Eine derartige Vorgehensweise erlaubt z. B. die Abtastung einer biologischen Probe, die bei der Untersuchung mit dem Lichtblattmikroskop u.a. ihrer Stabilität wegen nicht bewegt werden soll.

Bei dieser Ausführungsform des Lichtblattmikroskops wird der Bereich der Schärfentiefe der das Objektiv 30, die Tubuslinse 40 und das Mikrolinsenarray 60 umfassenden Detektionsoptik durch ein Lichtblatt beleuchtet, das deutlich dünner ist als die Schärfentiefe der Detektionsoptik. Es ist ein Mittel vorgesehen, das dünne Lichtblatt längs der Detektionsachse z derart stufenweise oder kontinuierlich in zueinander versetzte Positionen 100, 110, 120 zu bewegen, dass nacheinander verschiedene Ebenen, beispielsweise die Fokusebene in der Lichtblattposition 100, die Objektebene 1 in der Lichtblattposition 110 und die Objektebene 2 in der Lichtblattposition 130 beleuchtet werden. Dieses Mittel umfasst ein optisches Element zur Ablenkung des das Lichtblatt über die Beleuchtungsoptik 20 erzeugenden Strahlenbündels 140, das durch die Ablenkung verschiedene Stellen der Beleuchtungsoptik 20 längs der Detektionsachse z durchsetzt. In der Ausführungsform von Fig. 5 besteht das Ablenkungselement aus einem Scanspiegel 130.

Die Kamera 50 nimmt für die verschiedenen in Richtung der Detektionsachse z versetzten Lichtblattpositionen 100, 110, 120 Bilder der jeweiligen Ebene auf. Idealerweise entspricht der Abstand zwischen den Ebenen etwa der halben Strahlbreite, um das Nyquist-Kriterium einzuhalten. Größere Schritte sind auch möglich, um bei gleichbleibender Geschwindigkeit die Volumengröße zu erhöhen oder bei gleichbleibender Volumengröße die Geschwindigkeit zu erhöhen.

Das Postprocessing besteht im Fall der Ausführungsform gemäß Fig. 5 nicht primär in einer Rekonstruktion eines 3D-Volumens einer Probe aus einem Einzelbild. Es ist selbstverständlich auch in diesem Fall möglich, innerhalb des durch das dünne Lichtblatt beleuchteten Bereichs Bilder mehrerer Objektebenen zu generieren wie weiter oben beschrieben. Besonders Vorteilhaft ist in diesem Zusammenhang jedoch, dass der beleuchteten Bereich der Probe näherungsweise als Ebene gesehen werden kann und durch die Detektionsoptik ein scharfes Bild erzeugt werden kann, ohne die Detektionsoptik auf die beleuchtete Ebene nachfokussieren zu müssen. Dazu kann auch Information über die Position des Lichtblattes verwendet werden um die Rekonstruktion zu unterstützen.

Die Bewegung des Lichtblattes entlang der Detektionsachse kann auch kontinuierlich erfolgen und während der Belichtungszeit des Sensors, so dass effektiv im von der Kamera 50 aufgenommenen Bild ein Bereich beleuchtet wird, der Dicker ist, als das Lichtblatt. Ein Vorteil dieser Vorgehensweise besteht darin, dass hierbei die Homogenität der Beleuchtung des detektierten Volumens erhöht werden kann.

Hingegen muss um die Verbreiterung der effektiven Dicke des Lichtblattes zu vermeiden die Belichtungszeit der Kamera an die Scan-Geschwindigkeit angepasst werden, mit der das Lichtblatt versetzt wird. Zu diesem Zweck wird das Lichtblatt während der Belichtungszeit nur um einen Bruchteil, vorzugsweise weniger als 10%, vorzugsweise weniger als 5%, seiner Dicke verschoben.

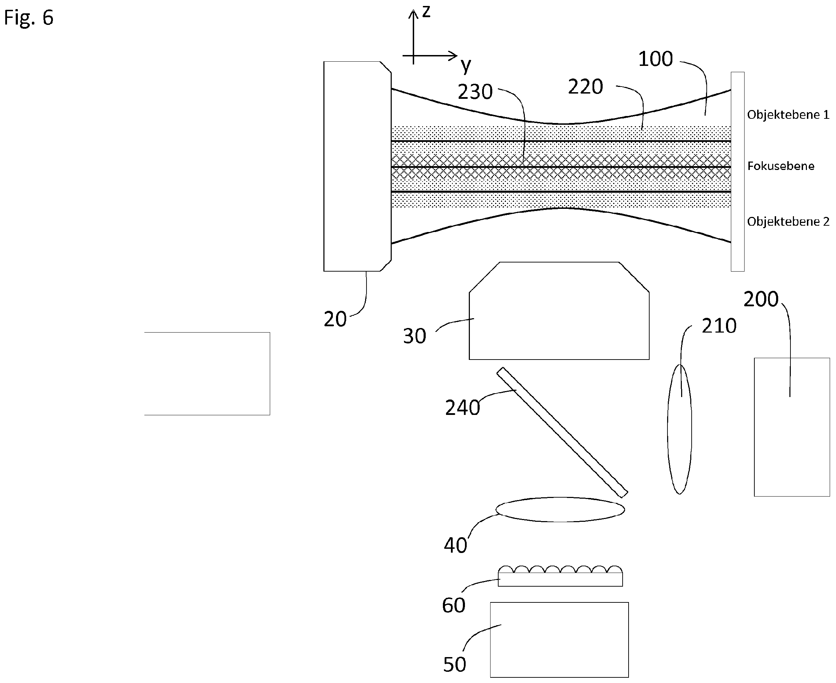

Fig. 6 zeigt eine Ausführungsform des erfindungsgemäßen Lichtblattmikroskops, das zusätzlich zur Abbildung der verschiedenen Ebenen einer Probe, der Fokusebene, der Objektebene 1 und der Objektebene 2 entsprechend den in Fig. 2 und 5 gezeigten Ausführungsformen des Lichtblattmikroskops mittels der Kamera 50 mit vorgeschaltetem Mikrolinsenarray 60 in reduzierter Auflösung eine hochauflösende Abbildung der Probe einer einzelnen Ebene, beispielsweise der Fokusebene oder einer der Objektebenen erlaubt.

Zu diesem Zweck wird das Licht im Detektionsstrahlengang über eine einen Strahlteiler (240) aufweisende Strahlteilerkonfiguration in den die Tubuslinse (40) und das Mikrolinsenarray 60 umfassenden Detektionspfad zur Kamera 50 und in einen senkrecht dazu verlaufenden Detektionspfad aufgespaltet ist, der über eine Tubuslinse 210 zu einer eine Kamera 200 führt, der kein Mikrolinsenarray vorgeschaltet ist. Der Strahlteiler 240 kann dabei entweder spektral neutral agieren oder als dichroitischer Kurz- oder Langpassfilter oder als Bandpassfilter ausgestaltet sein. Ebenfalls denkbar ist den Strahlteiler 240 als beweglicher Klappspiegel auszuführen, der das Licht entweder über die Linse 210 auf die Kamera 200 lenkt oder über die Linse 40 und das Mikrolinsenarray 60 auf die Kamera 50.

Der Schärfentiefenbereich des Detektionspfades im Lichtblatt ohne Mikrolinsen ist mit 230 bezeichnet, während der Schärfentiefenbereich des Detektionspfades im Lichtblatt mit Mikrolinsen mit 220 bezeichnet ist.

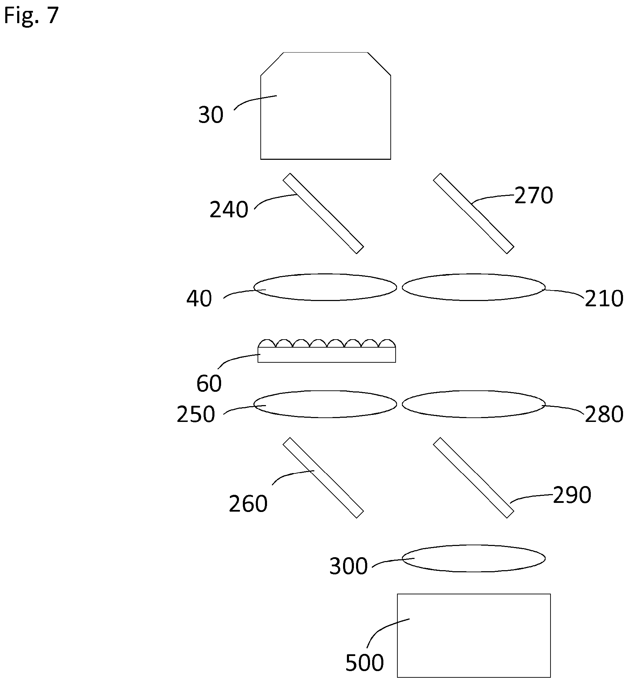

Bevorzugt kann die Strahlteilerkonfiguration von Fig. 6, wie in Fig. 7 gezeigt, derart gestaltet sein, dass die beiden Teilstrahlengänge auf ein und denselben Sensor einer gemeinsamen Kamera 500 abgebildet werden. Die durch die beiden Teilstrahlengänge erzeugten Bilder werden vorzugsweise nebeneinander auf den Sensor abgebildet, wie dies grundsätzlich beispielsweise von Zwei-Farben-Splittern bekannt ist. Dabei befindet sich jedoch in mindestens einem Teilstrahlengang ein Mikrolinsenarray. Das Mikrolinsenarray muss innerhalb des Splitters in einem Teilstrahlengang in einer zum ursprünglichen Standort konjugierten Ebene angeordnet werden. Erreicht wird dies, wie aus Fig. 7 hervorgeht, ausgehend von der Strahlteilerkonfiguration von Fig. 6 dadurch, dass der zweite Detektionspfad ohne Mikrolinsenarray nach dem Strahlteiler 240 um 90° derart um gelenkt wird, dass er parallel zum das Mikrolinsenarray umfassenden ersten Detektionspfad verläuft. Im zweiten Detektionspfad folgend auf den Strahlteiler befindet sich eine erste Linse 210 und eine zweite Linse 280, auf die ein Strahlteiler 290 folgt, durch den dieser Detektionspfad über eine Sammellinse 300 die gemeinsame Kamera 500 erreicht. Der erste Detektionspfad umfasst auf das Mikrolinsenarray 60 folgend eine Linse 250 und einen Spiegel 260, der diesen Detektionspfad um 90° auf den Strahlteiler 290 umlenkt, über den er, die Sammellinse 300 durchsetzend die gemeinsame Kamera 500 erreicht, in der er neben dem zweiten Detektionspfad auf demselben Sensor abgebildet wird. Die Strahlteiler 240 und 290 können dabei entweder spektral neutral agieren oder als dichroitischer Kurz- oder Langpassfilter oder als Bandpassfilter ausgestaltet sein. Alternativ ist es möglich die Strahlteiler 240 und 290 als bewegliche Klappspiegel auszuführen, die das Licht entweder über die Linsen 40 und 250 und das Mikrolinsenarray 60 oder über die Linsen 210 und 290 auf die Kamera 500 lenken. In diesem Fall werden die Bilder durch beide Teilstrahlengänge immer auf den gleichen Bereich des Sensors gelenkt.

## Patentansprüche

1. Lichtblattmikroskop mit einem Mittel (60) zum gleichzeitigen Abbilden mehrerer mittels eines Lichtblatts (10) beleuchteter Objektebenen durch eine Kamera (50) mit einer einen Detektionsstrahlengang zwischen dem Lichtblatt (10) und der Kamera (50) festlegenden Detektionsoptik (30, 40, 60), die eine Tubuslinse (TL) umfasst, wobei die Objektebenen um die Fokusebene der Detektionsoptik angeordnet sind,
**dadurch gekennzeichnet, dass** die Detektionsoptik (30, 40, 60) zum gleichzeitigen Abbilden der mehreren mittels des Lichtblattes beleuchteten Objektebenen im Detektionsstrahlengang vor der Kamera (50) angeordnet ein Mikrolinsenarray (60) umfasst, und
eine Post-Processing-Einrichtung zur Rekonstruktion eines 3D-Probevolumens aus einem Einzelbild,
wobei das Mikrolinsenarray (MLA, 60, 60') derart angeordnet ist, dass das Mikrolinsenarray (MLA, 60, 60') mit der Tubuslinse (TL) zusammen ein Teleskop ergibt, und wobei der Abstand d zwischen dem Mikrolinsenarray (MLA, 60, 60') und dem Sensor (S, 50) so gewählt ist, dass d = g f_{ML/} (g - f_{ML}) ist, wobei g der Abstand des Zwischenbildes von dem Mikrolinsenarray (MLA, 60, 60') und f_{ML} die Brennweite der Mikrolinsen ist.

2. Lichtblattmikroskop nach Anspruch 1, wobei das Mikrolinsenarray (60) in die Kamera (50) integriert ist.

3. Lichtblattmikroskop nach Anspruch 1 oder 2, wobei das Mikrolinsenarray (60, 60') Mikrolinsen derselben Brennweite, wobei die Zentren der Mikrolinsen des Mikrolinsenarray (60) auf einem rechteckigen oder auf einem quadratischen Gitter oder auf einem hexagonalen Gitter angeordnet sind.

4. Lichtblattmikroskop nach einem der Ansprüche 1 bis 3, wobei die Detektionsoptik (30, 40, 60) und ein Rekonstruktionsalgorithmus derart ausgelegt und aufeinander abgestimmt sind, dass bei einem Beleuchtungsstrahl einer FWHM-Schärfentiefe von etwa 300 µm, was einer numerischen Apertur von ≈ 0.06 entspricht, durch die Kamera (50) Bilder von drei Ebenen im einem Abstand von 2 µm oder Bilder von fünf Ebenen mit einem Abstand von 1 µm erzeugt werden, und/oder
wobei die Detektionsoptik (30, 40, 60) und Rekonstruktionsalgorithmus derart ausgelegt und aufeinander abgestimmt sind, dass bei einem Beleuchtungsstrahl einer FWHM-Schärfentiefe von etwa 300 µm, was einer numerischen Apertur von ≈ 0.06 entspricht, durch die Kamera (50) über einen Bereich der FWHM-Dicke von 4 µm bis 10 µm zwischen 4 und 10 Einzelbilder mit einer Schärfentiefe von 0.4 - 1 µm erzeugt werden.

5. Lichtblattmikroskop nach einem der Ansprüche 1 bis 4 mit einem ein Gauß'sches Profil aufweisenden Beleuchtungsstrahl, wobei Mittel vorgesehen sind, das Gauß'sche Profil des Beleuchtungsstrahls derart zu homogenisieren, dass sämtliche abzubildenden Ebenen mit im Wesentlichen derselben Lichtintensität ausgeleuchtet werden.

6. Lichtblattmikroskop nach Anspruch 5, wobei die Strahlprofil-Homogenisationsmittel ein im Beleuchtungsstrahlengang angeordnetes strahlformendes optisches Element umfasst, das dazu ausgelegt ist, dem Beleuchtungsstrahl ein Top-Hat Profil zu verleihen, dessen Breite derart gewählt ist, dass sämtliche abzubildenden Ebenen mit im Wesentlichen derselben Lichtintensität ausgeleuchtet werden, oder
wobei die Strahlprofil-Homogenisationsmittel ein im Beleuchtungsstrahlengang angeordnetes optisches Element, wie etwa eine TAG-Linse oder eine ETL (elektrisch abstimmbare Linse), umfassen, das den Beleuchtungsstrahl axial kurzzeitig derart verschiebt, dass sämtliche abzubildenden Ebenen mit im Wesentlichen derselben Lichtintensität ausgeleuchtet werden.

7. Lichtblattmikroskop nach einem der Ansprüche 1 bis 4 mit einem ein Bessel-Profil oder ein Bessel-ähnliches Profil aufweisenden Beleuchtungsstrahl, wobei die Ringstruktur dieses Beleuchtungsstrahlprofils derart an die Detektionsoptik angepasst ist, dass jeder Ring der Struktur eine andere Objektebene beleuchtet.

8. Lichtblattmikroskop nach Anspruch 7, wobei das Lichtstrahlprofil, etwa durch Zweistrahlen-Interferenz entlang der jeweiligen Detektionsebene ein Streifenmuster erzeugt.

9. Lichtblattmikroskop nach einem der Ansprüche 1 bis 4 mit einem Mathieu-Beleuchtungsstrahl, dessen Winkelspektrum aus zwei entgegensetzten, symmetrisch um den Strahlursprung angeordneten Ring-Segmenten besteht, wobei die Orientierung der Ringsegmente derart gewählt ist, dass sich im Bereich um die optische Achse des Beleuchtungsstrahls ein Streifenmuster entlang der Detektionsachse ausbildet.

10. Lichtblattmikroskop nach einem der Ansprüche 1 bis 9, wobei ein den Beleuchtungsstrahl in Strahlrichtung mit hoher Frequenz über eine Strecke, die maximal der Bildfeldgröße entspricht, vor- und zurückschiebendes Element vorgesehen ist, um das Strahlprofil zu homogenisieren.

11. Lichtblattmikroskop nach einem der Ansprüche 1 bis 10, wobei die Post-Processing-Einrichtung zum Erzeugen von Bildern von den Objektebenen vorgesehen ist, und/oder wobei der Detektionsstrahlengang durch eine einen Strahlteiler (240) aufweisende Strahlteilerkonfiguration in einen zur Kamera (50) über das Mikrolinsenarray (60) führenden Detektionspfad und in einen Detektionspfad aufgespalten ist, der ohne Vorschaltung eines Mikrolinsenarrays zu einer Kamera (200) führt, und/oder
wobei die Strahlteilerkonfiguration (240, 290) unter Verwendung von Spiegeln (260, 270) derart ausgelegt ist, dass der Detektionspfad mit, wie auch der Detektionspfad ohne Mikrolinsenarray (60) beide auf ein die dieselbe Kamera (500) nebeneinander abgebildet werden.

12. Verfahren zum gleichzeitigen Abbilden mehrerer mittels eines Lichtblatts (10) beleuchteter Objektebenen unter Verwendung des Lichtblattmikroskops nach einem der Ansprüche 1 bis 11.

13. Verfahren nach Anspruch 12, bei dem Objektvolumina durch eine Bewegung der detektierten Objektebenen relativ zum Objekt auf die Kamera (50) zeitlich aufeinanderfolgend abgebildet werden.

14. Verfahren nach Anspruch 12 oder 13, bei dem Objektvolumina synchron detektiert und abgebildet werden, indem mehrere beleuchtete Objektebenen gleichzeitig detektiert werden, die weiter voneinander entfernt sind, als es bei der effektiven Tiefenschärfe der Detektionsoptik (30) notwendig wäre, um entlang der Detektionsachse gemäß dem Nyquist-Theorem abzutasten, und/oder
bei dem zur Abbildung großer Objektvolumina ein Bilderstapel derart detektiert und aufgenommen wird, dass das Objekt relativ zur Fokusebene der Detektionsoptik (30) und des Mikrolinsenarray (60) in Schritten verschoben wird, die ein Nyquist-Sampling erlauben, die jedoch kleiner sind als der Abstand der in einem Schritt für eine Position detektierten Ebenen.

## Claims

1. Light sheet microscope with a means (60) for simultaneously imaging a plurality of object planes illuminated by means of a light sheet (10) through a camera (50) with a detection optic (30, 40, 60), which defines a detection beam path between the light sheet (10) and the camera (50), and which comprises a tube lens (TL), wherein the object planes are arranged around the focal plane of the detection optic,
**characterized in that** the detection optic (30, 40, 60) comprises a microlens array (60), arranged in the detection beam path before the camera (50), for simultaneously imaging the plurality of object planes illuminated by means of the light sheet, and
a post-processing device for reconstruction of a 3D sample volume from a single image,
wherein the microlens array (MLA, 60, 60') is arranged such that the microlens array (MLA, 60, 60') together with the tube lens (TL) forms a telescope, and wherein the distance d between the microlens array (MLA, 60, 60') and the sensor (S, 50) is selected such that d = gf_{ML}/(g - f_{ML}), wherein g is the distance of the intermediate image from the microlens array (MLA, 60, 60') and f_{ML} is the focal length of the microlenses.

2. Light sheet microscope according to claim 1, wherein the microlens array (60) is integrated into the camera (50).

3. Light sheet microscope according to claim 1 or 2, wherein the microlens array (60, 60') microlenses of the same focal length, wherein the centres of the microlenses of the microlens array (60) are arranged on a rectangular grid or on a square grid or on a hexagonal grid.

4. Light sheet microscope according to one of claims 1 to 3, wherein the detection optic (30, 40, 60) and a reconstruction algorithm are configured and matched to one another such that, with an illumination beam having an FWHM depth of focus of about 300 µm, which corresponds to a numerical aperture of ≈ 0.06, images of three planes at a distance of 2 µm or images of five planes at a distance of 1 µm are generated by the camera (50), and/or wherein the detection optic (30, 40, 60) and reconstruction algorithm are configured and matched to one another such that, with an illumination beam having an FWHM depth of focus of about 300 µm, which corresponds to a numerical aperture of ≈ 0.06, between 4 and 10 individual images having a depth of focus of 0.4 - 1 µm are generated by the camera (50) over a range of the FWHM thickness of 4 µm to 10 µm.

5. Light sheet microscope according to one of claims 1 to 4 with an illumination beam having a Gaussian profile, wherein means are provided to homogenize the Gaussian profile of the illumination beam such that all planes to be imaged are illuminated with substantially the same light intensity.

6. Light sheet microscope according to claim 5, wherein the beam-profile homogenization means comprises a beam-shaping optical element arranged in the illumination beam path, which is designed to impart to the illumination beam a top-hat profile, the width of which is selected such that all planes to be imaged are illuminated with substantially the same light intensity, or
wherein the beam-profile homogenization means comprise an optical element arranged in the illumination beam path, such as for example a TAG lens or an ETL (electrically tunable lens), which axially shifts the illumination beam briefly such that all planes to be imaged are illuminated with substantially the same light intensity.

7. Light sheet microscope according to one of claims 1 to 4 with an illumination beam having a Bessel profile or a Bessel-like profile, wherein the ring structure of this illumination beam profile is adapted to the detection optic such that each ring of the structure illuminates a different object plane.

8. Light sheet microscope according to claim 7, wherein the light beam profile, for example by two-beam interference, generates a fringe pattern along the respective detection plane.

9. Light sheet microscope according to one of claims 1 to 4 with a Mathieu illumination beam, the angular spectrum of which consists of two opposite ring segments arranged symmetrically around the beam origin, wherein the orientation of the ring segments is selected such that a fringe pattern is formed in the region around the optical axis of the illumination beam along the detection axis.

10. Light sheet microscope according to one of claims 1 to 9, wherein an element is provided which pushes the illumination beam back and forth in the beam direction at high frequency over a distance which corresponds at most to the image field dimension, in order to homogenize the beam profile.

11. Light sheet microscope according to one of claims 1 to 10, wherein the post-processing device is provided for generating images of the object planes, and/or
wherein the detection beam path is split by a beam splitter configuration comprising a beam splitter (240) into a detection path leading to the camera (50) via the microlens array (60) and into a detection path which leads to a camera (200) without upstream connection of a microlens array, and/or
wherein the beam splitter configuration (240, 290) is designed, using mirrors (260, 270), such that the detection path with, as well as the detection path without, microlens array (60) are both imaged next to one another onto one and the same camera (500).

12. Method for simultaneously imaging a plurality of object planes illuminated by means of a light sheet (10) using the light sheet microscope according to one of claims 1 to 11.

13. Method according to claim 12, in which object volumes are imaged successively in time onto the camera (50) by a movement of the detected object planes relative to the object.

14. Method according to claim 12 or 13, in which object volumes are synchronously detected and imaged in that a plurality of illuminated object planes are detected simultaneously, which are further apart from one another than would be necessary with the effective depth of field of the detection optic (30) in order to sample along the detection axis according to the Nyquist theorem, and/or in which, for imaging large object volumes, an image stack is detected and recorded such that the object is displaced relative to the focal plane of the detection optic (30) and of the microlens array (60) in steps which permit Nyquist sampling, which, however, are smaller than the distance of the planes detected in one step for one position.

## Revendications

1. Microscope à feuille de lumière comportant un moyen (60) pour la représentation simultanée de plusieurs plans d'objet éclairés au moyen d'une feuille de lumière (10) par une caméra (50) avec une optique de détection (30, 40, 60), qui définit un trajet de faisceau de détection entre la feuille de lumière (10) et la caméra (50) et qui comprend une lentille de tube (TL),
dans lequel les plans d'objet sont disposés autour du plan focal de l'optique de détection,
**caractérisé en ce que** l'optique de détection (30, 40, 60) comprend, pour la représentation simultanée de plusieurs plans d'objet éclairés au moyen de la feuille de lumière, un réseau de microlentilles (60) disposé dans le trajet de faisceau de détection devant la caméra (50), et
un dispositif de post-traitement pour la reconstruction d'un volume d'échantillon 3D à partir d'une image unique,
dans lequel le réseau de microlentilles (MLA, 60, 60') est disposé de telle sorte que le réseau de microlentilles (MLA, 60, 60') forme avec la lentille de tube (TL) un télescope, et dans lequel la distance d entre le réseau de microlentilles (MLA, 60, 60') et le capteur (S, 50) est choisie de telle sorte que d = gf_{ML}/(g-f_{ML}), g étant la distance de l'image intermédiaire au réseau de microlentilles (MLA, 60, 60') et f_{ML} étant la distance focale des microlentilles.

2. Microscope à feuille de lumière selon la revendication 1, dans lequel le réseau de microlentilles (60) est intégré dans la caméra (50).

3. Microscope à feuille de lumière selon la revendication 1 ou 2, dans lequel le réseau de microlentilles (60, 60') comprend des microlentilles de la même distance focale, dans lequel les centres des microlentilles du réseau de microlentilles (60) sont disposés sur une grille rectangulaire ou sur une grille carrée ou sur une grille hexagonale.

4. Microscope à feuille de lumière selon l'une des revendications 1 à 3, dans lequel l'optique de détection (30, 40, 60) et un algorithme de reconstruction sont conçus et adaptés l'un à l'autre de telle sorte que, avec un faisceau d'éclairage ayant une profondeur de champ FWHM d'environ 300 µm, ce qui correspond à une ouverture numérique de ≈ 0,06, des images de trois plans à un espacement de 2 µm ou des images de cinq plans avec un espacement de 1 µm sont produites par la caméra (50), et/ou
dans lequel l'optique de détection (30, 40, 60) et un algorithme de reconstruction sont conçus et adaptés l'un à l'autre de telle sorte que, avec un faisceau d'éclairage d'une profondeur de champ à FWHM d'environ 300 µm, ce qui correspond à une ouverture numérique de ≈ 0.06, entre 4 et 10 images individuelles avec une profondeur de champ de 0.4-1 µm sont produites par la caméra (50) sur une plage de l'épaisseur à FWHM de 4 µm à 10 µm.

5. Microscope à feuille de lumière selon l'une des revendications 1 à 4 avec un faisceau d'éclairage présentant un profil gaussien, dans lequel des moyens sont prévus pour homogénéiser le profil gaussien du faisceau d'éclairage de telle sorte que tous les plans à représenter soient éclairés avec essentiellement la même intensité lumineuse.

6. Microscope à feuille de lumière selon la revendication 5, dans lequel le moyen d'homogénéisation du profil de faisceau comprend un élément optique de mise en forme de faisceau disposé dans le trajet de faisceau d'éclairage, qui est conçu pour conférer au faisceau d'éclairage un profil « top-hat », dont la largeur est choisie de telle sorte que tous les plans à représenter soient éclairés avec essentiellement la même intensité lumineuse, ou
dans lequel les moyens d'homogénéisation du profil de faisceau comprennent un élément optique disposé dans le trajet de faisceau d'éclairage, tel qu'une lentille TAG ou une ETL (lentille électriquement accordable), qui déplace axialement le faisceau d'éclairage brièvement de telle sorte que tous les plans à représenter soient éclairés avec essentiellement la même intensité lumineuse.

7. Microscope à feuille de lumière selon l'une des revendications 1 à 4 avec un faisceau d'éclairage présentant un profil de Bessel ou un profil de type Bessel, dans lequel la structure annulaire de ce profil de faisceau d'éclairage est adaptée à l'optique de détection de telle sorte que chaque anneau de la structure éclaire un plan d'objet différent.

8. Microscope à feuille de lumière selon la revendication 7, dans lequel le profil de faisceau lumineux, par exemple au moyen d'une interférence à deux faisceaux le long du plan de détection respectif, produit un motif de franges.

9. Microscope à feuille de lumière selon l'une des revendications 1 à 4 avec un faisceau d'éclairage de Mathieu, dont le spectre angulaire se compose de deux segments d'anneau opposés, disposés symétriquement autour de l'origine du faisceau, dans lequel l'orientation des segments d'anneau est choisie de telle sorte qu'un motif de franges se forme dans la plage autour de l'axe optique du faisceau d'éclairage le long de l'axe de détection.

10. Microscope à feuille de lumière selon l'une des revendications 1 à 9, dans lequel un élément qui pousse le faisceau d'éclairage dans le sens du faisceau à haute fréquence vers l'avant et vers l'arrière sur une distance qui correspond au maximum à la taille du champ d'image est prévu afin d'homogénéiser le profil de faisceau.

11. Microscope à feuille de lumière selon l'une des revendications 1 à 10, dans lequel le dispositif de post-traitement est prévu pour produire des images des plans d'objet, et/ou
dans lequel le trajet de faisceau de détection est divisé, par une configuration de séparateur de faisceau comprenant un séparateur de faisceau (240), en un trajet de détection conduisant à la caméra (50) via le réseau de microlentilles (60) et en un trajet de détection qui conduit à une caméra (200) sans interposition d'un réseau de microlentilles, et/ou
dans lequel la configuration de séparateur de faisceau (240, 290) est conçue, en utilisant des miroirs (260, 270), de telle sorte que le trajet de détection avec, ainsi que le trajet de détection sans réseau de microlentilles (60), soient tous les deux représentés côte à côte sur la même caméra (500).

12. Procédé pour la représentation simultanée de plusieurs plans d'objet éclairés au moyen d'une feuille de lumière (10) en utilisant le microscope à feuille de lumière selon l'une des revendications 1 à 11.

13. Procédé selon la revendication 12, dans lequel des volumes d'objet sont représentés successivement dans le temps sur la caméra (50) par un mouvement des plans d'objet détectés par rapport à l'objet.

14. Procédé selon la revendication 12 ou la revendication 13, dans lequel des volumes d'objet sont détectés et représentés de manière synchrone en ce que plusieurs plans d'objet éclairés sont détectés simultanément, qui sont éloignés les uns des autres davantage qu'il ne serait nécessaire avec la profondeur de champ effective de l'optique de détection (30) pour échantillonner le long de l'axe de détection conformément au théorème de Nyquist, et/ou
dans lequel, pour la représentation de grands volumes d'objet, un empilement d'images est détecté de telle sorte et acquis de telle sorte que l'objet est déplacé, par rapport au plan focal de l'optique de détection (30) et du réseau de microlentilles (60), par pas qui permettent un échantillonnage de Nyquist, qui sont cependant plus petits que l'espacement des plans détectés en une étape pour une position.
